# EUROPEAN PATENT APPLICATION

(11) **EP 4 582 656 A1**
(43) Date of publication of application: **09.07.2025**
(21) Application number: 24201389.4
(22) Date of filing: 19.09.2024
(51) Int. Cl.: E04H 4/16

(54) **POOL CLEANING DEVICE AND METHOD FOR CONTROLLING THE SAME**

(30) Priority: 05.01.2024 WO PCT/CN2024/070969; 24.07.2024 CN 202411011435
(71) Applicant: Shenzhen Aiper Intelligent Co., Ltd., Shenzhen 518131 (CN)
(72) Inventor: Bian, Liang, Shenzhen 518131 (CN); Wang, Tao, Shenzhen 518131 (CN)
(74) Representative: Wenzel Nemetzade Warthmüller Patentanwälte Part mbB

(57) **Abstract**

Disclosed are a pool cleaning device and a corresponding control method. The pool cleaning device includes: a fluid ejecting unit including a fluid channel through which water flows and a vector nozzle, an inlet of the vector nozzle being rotatably connected with the fluid channel; a first driving unit configured to drive water to be ejected from an outlet of the vector nozzle via the fluid channel; a housing, with at least two discharge openings arranged thereon; and a second driving unit configured to drive the vector nozzle to rotate so that the outlet of the vector nozzle is at least partially aligned with one of the at least two discharge openings.

## Description

### TECHNICAL FIELD

The disclosure relates to a pool cleaning device and a corresponding control method thereof.

### BACKGROUND

A pool cleaning device is generally used for cleaning a pool, for example, get rid of garbage/debris on the bottom, side walls and/or water surface of a pool and cleaning the bottom, side walls and/or water surface of a pool, such as a swimming pool, so as to filter and purify the water in the pool. The filtered and purified water can be discharged into the pool, and the discharged water can be used as a thrust to the pool cleaning device, so as to provide the thrust for the pool cleaning device to travel in the water and/or on the water surface, and/or provide pressure for the pool cleaning device traveling on the wall of the pool so that the pool cleaning device can be stably attached to the wall of the pool when in a vertical orientation.

### SUMMARY

According to one aspect of the present disclosure, there is disclosed a pool cleaning device, which comprises a fluid ejecting unit comprising a fluid channel through which water flows and a vector nozzle, wherein an inlet of the vector nozzle is rotatably connected with the fluid channel; a first driving unit configured to drive water to be ejected from an outlet of the vector nozzle via the fluid channel; a housing, wherein at least two discharge openings are arranged on the housing, the two discharge openings configured to discharge the water ejected from the outlet of the vector nozzle to outside of the pool cleaning device; and a second driving unit configured to drive the vector nozzle to rotate so that the outlet of the vector nozzle is at least partially aligned with one of the at least two discharge openings.

According to an embodiment of the present disclosure, the pool cleaning device further comprises a waterflow guiding unit configured to guide the water ejected from the outlet of the vector nozzle to one of the at least two discharge openings.

According to an embodiment of the present disclosure, the waterflow guiding unit comprises at least two water conduits, and the outlet of the vector nozzle is configured to be at least partially aligned with an inlet of one of the at least two water conduits after the vector nozzle is rotated.

According to an embodiment of the present disclosure, the outlets of the at least two water conduits are at least partially aligned with the at least two discharge openings respectively.

According to an embodiment of the present disclosure, the second driving unit is configured to drive the vector nozzle to rotate based on an operation requirement or motion state of the pool cleaning device.

According to an embodiment of the present disclosure, the waterflow guiding unit is arranged inside the housing.

According to an embodiment of the present disclosure, the pool cleaning device further comprises a direction determining unit configured to determine a direction of the outlet of the vector nozzle; wherein, the second driving unit is configured to drive the vector nozzle to rotate based on the determined direction of the outlet of the vector nozzle.

According to an embodiment of the present disclosure, the direction determining unit comprises: at least one signal transmitting component arranged on one of the vector nozzle and the fluid channel; and at least one signal receiving component arranged on the other of the vector nozzle and the fluid channel.

According to an embodiment of the present disclosure, the at least one signal transmitting component is a magnetic component; and the at least one signal receiving component is a Hall sensor.

According to an embodiment of the present disclosure, the pool cleaning device further comprises a transmission unit coupled between the vector nozzle and the second driving unit; wherein, the second driving unit is configured to drive the vector nozzle to rotate via the transmission unit.

According to an embodiment of the present disclosure, the transmission unit comprises a first set of gears which comprises a first gear and a second gear, wherein the first gear is arranged on the vector nozzle, and the second gear is meshed with the first gear; the second driving unit is configured to drive the second gear.

According to an embodiment of the present disclosure, the transmission unit further comprises a second set of gears which comprises a third gear and a fourth gear, wherein the third gear and the second gear are installed on a rod, and the fourth gear is meshed with the third gear; the second driving unit is configured to drive the fourth gear.

According to an embodiment of the present disclosure, the second driving unit comprises a motor and a control unit, and the control unit is configured to control the motor to drive the vector nozzle to rotate.

According to an embodiment of the present disclosure, a sealing member is arranged on the outlet of the vector nozzle or on at least one inlet of the at least two water conduits.

According to an embodiment of the present disclosure, the at least two discharge openings comprise a first discharge opening with discharging in a first direction, a second discharge opening with discharging in a second direction, and a third discharge opening with discharging in a third direction.

According to an embodiment of the present disclosure, the first direction, the second direction and the third direction are located on a same plane.

According to an embodiment of the present disclosure, a duration in which the second driving unit drives the vector nozzle to rotate is set as a time threshold.

According to an embodiment of the present disclosure, at least one pair of the fluid ejecting units and the corresponding discharge openings are symmetrically arranged on both sides of a longitudinal axis of a body of the pool cleaning device.

According to an embodiment of the present disclosure, the vector nozzles of the at least one pair of fluid ejecting units are configured to be driven independently to rotate

According to an embodiment of the present disclosure, the pool cleaning device further comprises a filtering unit and a traveling unit, wherein the filtering unit is configured to filter the water sucked from the outside of the pool cleaning device by the first driving unit, and the traveling unit is configured to drive the pool cleaning device to travel.

According to an embodiment of the present disclosure, at least one of the at least two discharge openings is provided with a detachable grid plate.

According to another aspect of the present disclosure, there is disclosed a method for controlling the pool cleaning device, comprising: driving water to be ejected from a vector nozzle of the pool cleaning device; and based on an operation requirement or motion state of the pool cleaning device, controlling the vector nozzle to rotate so as to guide the water ejected from the vector nozzle to one of a plurality of discharge openings in different directions of the pool cleaning device and discharge the water from the pool cleaning device.

### BRIEF DESCRIPTION OF THE DRAWINGS

In order to explain the technical solution in the embodiments of the disclosure more clearly, the drawings for the description of the embodiment or the prior art will be briefly introduced below. Apparently, the drawings in the following description only relate to some embodiments of the disclosure. For those skilled in the field, other drawings can be obtained based on these drawings without paying creative work.
Figs. 1A-1B illustrate a schematic outline of a pool cleaning device according to an embodiment of the present disclosure.
Fig. 2 is a schematic block diagram of a pool cleaning apparatus according to an embodiment of the present disclosure.
Figs. 3A-3E schematically illustrate an internal structure and related components of a pool cleaning device according to an embodiment of the present disclosure.
Figs. 4A and 4B respectively illustrate an appearance of the pool cleaning device before and after a part of a housing of the pool cleaning device is removed.
Fig. 5 illustrates schematic structures of a second driving unit and a corresponding transmission unit of a pool cleaning device according to an embodiment of the present disclosure.
Fig. 6 illustrates a schematic flowchart of a method for controlling the pool cleaning device according to an embodiment of the present disclosure.

### DETAILED DESCRIPTION

The detailed description set forth below in connection with the drawings is intended as a description of various configurations, and is not intended to represent the only configurations in which the concepts described herein can be practiced. The detailed description includes specific details in order to provide a thorough understanding of various concepts. However, it will be apparent to those skilled in the art that these concepts may be practiced without these specific details.

In the description of this disclosure, it should be understood that the orientation and/or position relationships which are indicated by the terms such as center, longitudinal direction, lateral direction, length, width, thickness, top, bottom, front, back, left, right, vertical, horizontal, top, bottom, interior, exterior, clockwise, anti-clockwise, axial, radial, circumferential, one side, the other side and etc. refer to the orientation or position relationships illustrated in the drawings, which is only for the convenience of describing the present disclosure and simplifying the description, and does not indicate or imply that the device or element must have a specific orientation, be constructed or operated in a specific orientation, and thus it should not be interpreted to make any limitations on the present disclosure.

In addition, the terms such "first", "second", "third" and etc. involving the sequence are only used for descriptive purposes, and cannot be understood as indicating or implying relative importance or implicitly indicating the number of indicated technical features. Therefore, features defined with terms involving the sequence such as "first", "second", "third" and etc. can include at least one of these features explicitly or implicitly. In the description of this disclosure, "plural" means at least two, such as two, three, etc., unless otherwise specifically defined.

In addition, in the drawings, the dimensions may be exaggerated for clarity of illustration and are not drawn to the actual scale. Like reference numerals generally refer to like elements throughout the drawings.

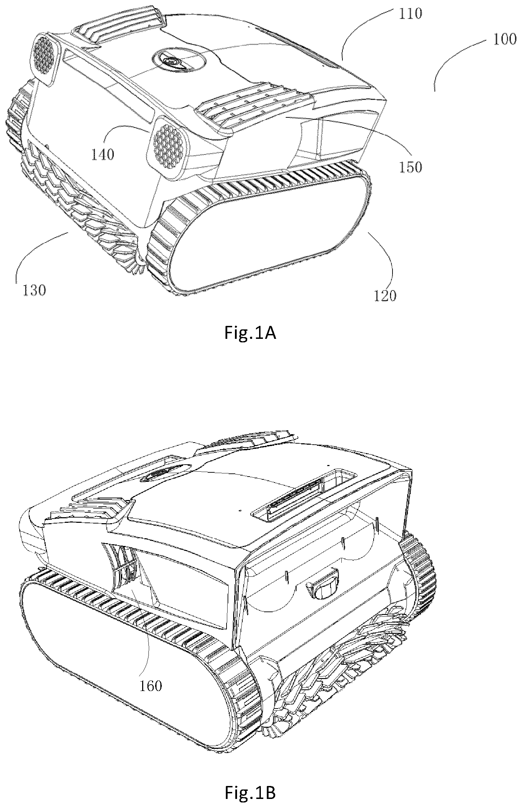

Fig. 1A schematically illustrates the appearance of a pool cleaning device 100 according to an embodiment of the present disclosure. The pool cleaning device can clean the bottom, wall, water and water surface of a pool (such as a swimming pool) as needed, for example, to get rid of the garbage in the water, on bottom and water surface, and remove the dirt on the bottom and sidewall of the pool. As illustrated in Fig. 1A, the pool cleaning device 100 may include a housing 110, a traveling unit 120, a cleaning unit 130 and other structures/components. As an example, the pool cleaning device 100 may further include a buoyancy adjusting unit (not illustrated), so that the pool cleaning device can adjust its depth in the water as required, for example, it can float on the water surface, dive into the water, and sink to the bottom of the water, so as to carry out the cleaning operation on the water surface, in the water or on the bottom of the water. As an example, a control bin, a power bin and a filter bin (not illustrated) can be arranged in the housing 100, wherein control circuits such as a microprocessor, a digital signal processor (DSP) and a microcontroller can be arranged in the control bin, drive units such as a water pump and a drive motor can be arranged in the power bin, and a filter unit can be arranged in the filter bin, so as to filter and purify the water entering the filter bin through an inlet, and filter out debris therein; the filtered water is discharged from the pool cleaning device via outlet(s) to the pool. As an example, Fig. 1A illustrates that the traveling unit 120 may include crawler traveling units on both sides of the lower part of the pool cleaning device 100, so that the pool cleaning device can travel in the water, on the bottom of the pool, or on the wall of the pool, so as to perform corresponding cleaning operations. However, the traveling unit is not limited to the travelling unit of the type illustrated in Fig. 1A, but may include, for example, a wheeled traveling unit, which is not limited herein.

As an example, Fig. 1A also illustrates discharging openings 140 symmetrically arranged on the rear side of the housing 110 of the pool cleaning device 100 with respect to the longitudinal axis of the body of the pool cleaning device, and discharging openings 150 symmetrically arranged on the top of the housing 110 with respect to the longitudinal axis of the body of the pool cleaning device; and Fig. 1B further illustrates one of the discharging openings 160 symmetrically arranged at the front side of the housing 110 of the pool cleaning device 100. As illustrated in Figs. 1A-1B, the discharging openings 140-160 may be mesh-like or grid-like as required, so as to discharge the water filtered and cleaned by the pool cleaning device into the pool.

As an example, a detachable grid/mesh board, such as a detachable board with grid/mesh for discharging the water or a detachable waterflow guiding plate, may be provided on any one of the discharge openings 140-160.

In addition, the pool cleaning device 100 can use the fluid ejecting unit as an auxiliary traveling unit, so that the pool cleaning device can be pushed to travel on the water surface, in the water, on the bottom and/or the wall of the pool by using the reaction force generated by the water ejected from the nozzle of the fluid ejecting unit. In this case, the water ejected from the nozzle can be guided to one of the discharge openings 140-160 provided on the housing 110 of the pool cleaning device 100, thereby generating thrust in different directions.

For example, as illustrated in Figs. 1A-1B, when the water ejected from the nozzle is guided to the discharge opening(s) 140 arranged at the rear side of the housing 110 and discharged, the pool cleaning device 100 can generate a forward thrust parallel to the longitudinal axis of the body of the pool cleaning device to push the pool cleaning device 100 to move forward; when the water ejected from the nozzle is guided to the discharge opening(s) 160 arranged at the front side of the housing 110 and discharged, the pool cleaning device 100 can generate a backward thrust parallel to the longitudinal axis of the body of the pool cleaning device, and push the pool cleaning device 100 to move backward; when the water ejected from the nozzle is guided to the discharge opening(s) 150 arranged at the top of the housing 110 and discharged, the pool cleaning device 100 can generate a downward thrust perpendicular to the bottom plane of the body of the pool cleaning device, thereby applying a pressure towards the bottom of the pool cleaning device 100,wherein such a pressure can be used not only as the power for the pool cleaning device 100 to dive in the water, but also as the pressure towards the bottom of the pool cleaning device when the pool cleaning device 100 travels on the wall of the pool, so as to improve the adhesion between the pool cleaning device 100 and the wall of the pool and maintain the stability of its body in the vertical state.

Although Figs. 1A-1B illustrate an overall appearance of the pool cleaning apparatus of the embodiment of the present disclosure. It should be understood that this is only schematic and does not constitute any limitation of the principles of the present disclosure. For example, the position, shape and/or number of the outlets 140-160 provided on the housing 110 of the pool cleaning device 100 can be adjusted according to the actual operation requirements of the pool cleaning device, and there is no limitation here.

Alternatively, the outlets can be arranged on both sides of the position, which is close to the waterline, on the housing 100 of the pool cleaning device so that when the pool cleaning device floats on the water surface, the position and orientation of the pool cleaning device can be adjusted by guiding the water ejected from the fluid ejecting unit to a specific direction. Alternatively, the outlet can be arranged at the approximate center position of the top and/or bottom of the housing in the vertical direction perpendicular to the plane of the bottom of the pool cleaning device, so that the water ejected from the fluid ejecting unit can be guided to the direction perpendicular to the plane of the bottom of the pool cleaning device as the power for the pool cleaning device to float/dive.

In addition, for the discharging openings arranged at different positions on the housing of the pool cleaning device, the water ejected from the fluid ejecting unit can be guided to the corresponding discharging openings, so that the traveling direction of the pool cleaning device is not limited to the horizontal and/or vertical direction, but also can be an inclined direction at a certain angle with the vertical direction. For those skilled in the art, the position, shape and/or number of the discharging openings on the housing of the pool cleaning device can be set according to the specific application situation, size and other related factors.

According to an embodiment, the traveling unit 120 of the pool cleaning device 100 can be configured to drive the pool cleaning device 100 to travel along a specific trajectory or in a specific direction on the bottom, wall, in the water and on the water surface of the pool under the control of the control unit inside the pool cleaning device 100. At the same time, the cleaning unit 130 can be activated to get rid of the garbage, debris, dirt, etc. on the bottom, wall, in the water and/or on the water surface of the pool, so that they can be sucked into the filter bin of the pool cleaning device together with the waterflow. Then, filtering is carried out through the filter bin, so that garbage, debris and/or dirt are trapped in the filter bin, and the filtered water is discharged from the pool cleaning device, thereby cleaning the pool. As an example, the cleaning unit 130 may include components such as a roller brush provided at the front side and/or the rear side of the pool cleaning device.

It should be understood that the pool cleaning device 100 illustrated in Figs. 1A-1B is only an example, and one or more aspects such as appearance, structure, layout, components, functions, etc. can be changed by those skilled in the art according to actual needs without departing from the principles of the present disclosure.

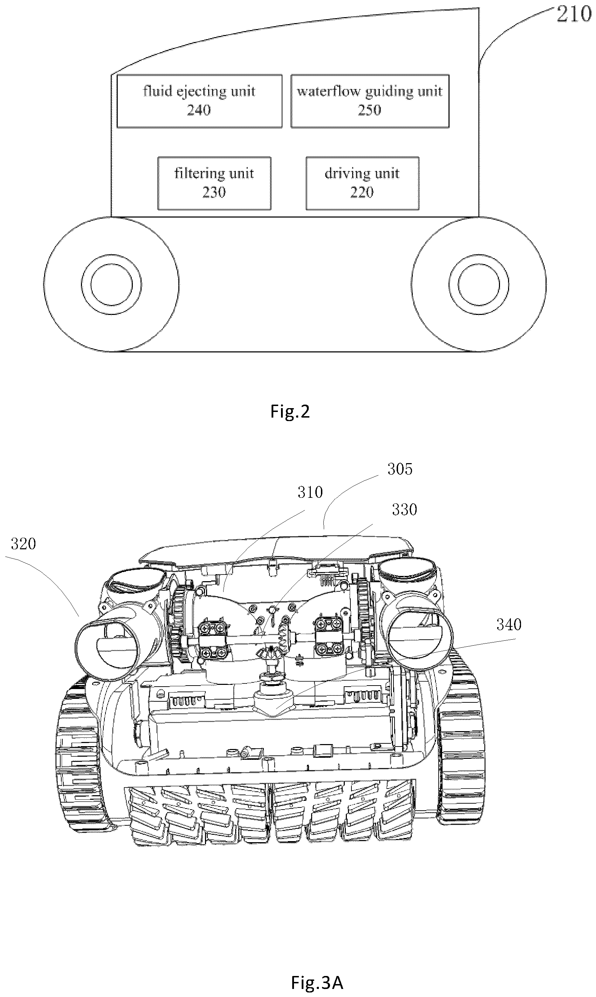

Fig. 2 is a schematic block diagram of a pool cleaning device 200 according to an embodiment of the present disclosure. As illustrated in Fig. 2, the pool cleaning device may include a housing 210, a driving unit 220, a filtering unit 230, a fluid ejecting unit 240 and a waterflow guiding unit 250. Among others, through the driving unit 220 such as a water pump, the pool cleaning device 200 can suck the water in the pool into the filter unit 230 of the pool cleaning device via an inlet (not illustrated) arranged on the housing 210 of the pool cleaning device, and after being filtered and cleaned through the filter unit 230, the filtered water is ejected through the nozzle of the fluid ejecting unit 240, and the ejected water is discharged from the pool cleaning device via the outlet of the waterflow guiding unit 250 arranged inside the housing 210 of the pool cleaning device and via the discharging openings on the housing 210.

According to the embodiment of the present disclosure, it is proposed that the direction of the water ejected from the pool cleaning device can be changed by changing the direction of the outlet of the nozzle of the fluid ejecting unit so as to match it with the direction of the outlet of the waterflow guiding unit, so that corresponding thrust can be provided for the pool cleaning device in multiple directions, for example, as the driving force for the pool cleaning device to travel and/or pressure being applied to the pool cleaning device towards the pool wall.

For example, the direction of the outlet of the nozzle can be controlled so that the drainage direction of the pool cleaning device is parallel to the longitudinal axis of the body of the pool cleaning device, that is, it is 0 degrees or 180 degrees with regard to the longitudinal axis of the body of the pool cleaning device, so that the water discharged by the pool cleaning device can be used as a thrust for the pool cleaning device to move forward or backward along a straight line parallel to the longitudinal axis of the body. Alternatively, the direction of the outlet of the nozzle can be controlled so that the drainage direction of the pool cleaning device is perpendicular to the plane of the bottom of the pool cleaning device, that is, it is 90 degrees or - 90 degrees with regard to the plane of the bottom of the pool cleaning device, so that the water discharged from the pool cleaning device can be used as a thrust in the direction perpendicular to the plane of the bottom of the pool cleaning device.

According to one aspect of the present disclosure, a pool cleaning device is proposed, which comprises: a fluid ejecting unit which includes a fluid channel through which water flows and a vector nozzle, wherein the inlet of the vector nozzle is rotatably connected with the fluid channel; a first driving unit, for driving the water to be ejected from the outlet of the vector nozzle through the fluid channel; a housing, provided with at least two outlets, wherein the outlets are used for discharging the water ejected from the outlets of the vector nozzles to the outside of the pool cleaning device; and a second driving unit, for driving the vector nozzle to rotate so that the outlet of the vector nozzle is at least partially aligned with one of the at least two outlets.

According to the embodiment of the present disclosure, the vector nozzle refers to a nozzle whose outlet direction can be adjusted. For example, the nozzle can be controlled to rotate to change the direction of the outlet based on the operation requirement or motion state of the pool cleaning device. For example, the operation requirements may include but not limited to the following scenarios: when the pool cleaning device changes from bottom operation to cleaning operation or traveling on the pool wall, the direction of the outlet of the nozzle can be controlled to change from a horizontal direction to a direction perpendicular to the plane of the bottom of the pool cleaning device and towards the top of the pool cleaning device, that is, the direction perpendicular to the pool wall and towards the top of the pool cleaning device. For another example, when the pool cleaning device needs to be switched to perform cleaning operation or travel on the water surface or underwater, the direction of the outlet of the nozzle can be controlled to be parallel to the longitudinal axis of the body of the pool cleaning device, for example, forward/backward direction of the pool cleaning device, so as to generate a thrust for the pool cleaning device to travel. In addition, as an example, the motion state can include steering, extricating, accelerating, decelerating, sudden braking, special motion path and etc., and can include any motion state that needs to change the direction of the thrust generated by the nozzle.

Fig. 3A schematically illustrates the overall structure of the interior of a pool cleaning device 300 according to an embodiment of the present disclosure. It should be understood that a part of the housing 305 has been removed for the convenience of illustrating the internal structure of the pool cleaning device, and some structures and/or components inside the pool cleaning device have been omitted for the convenience of describing the principles of the present disclosure. As illustrated in Fig. 3A, a fluid ejecting unit 310 and a waterflow guiding unit 320 are arranged inside the housing of the pool cleaning device 300.

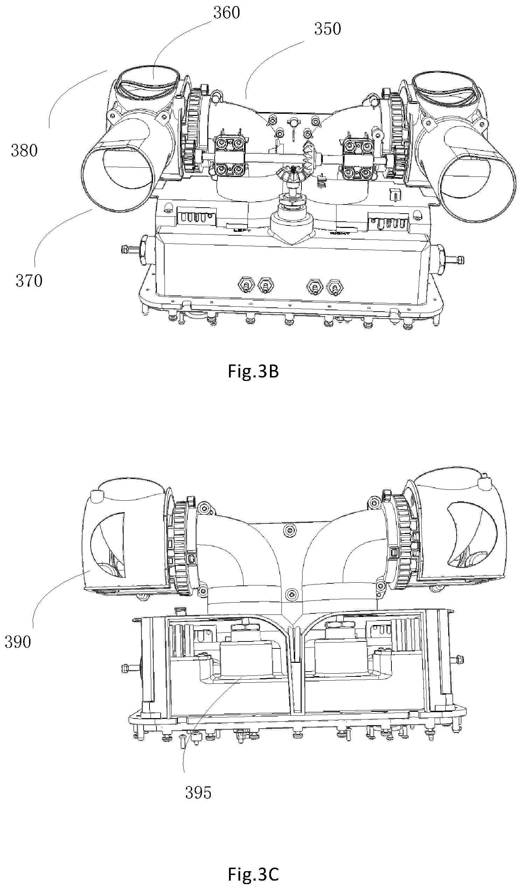

Specifically, as illustrated in Fig. 3B, the fluid ejecting unit 310 may include: a fluid channel 350 through which the water flows and a vector nozzle 360, wherein the inlet of the vector nozzle is rotatably connected with the fluid channel; a waterflow guiding unit 320, which may include at least two outlets, such as outlets 370 and 380 illustrated in Fig. 3B, which are used to guide the water ejected from the outlet of the vector nozzle to the outside of the pool cleaning device. For example, the outlet 370 may be aligned with the discharge opening 140 on the housing of the pool cleaning device illustrated in Fig. 1A, and the outlet 380 may be aligned with the discharge opening 150 on the housing of the pool cleaning device illustrated in Fig. 1A.

In addition, as illustrated in Fig. 3C, the waterflow guiding unit 320 may further include a third outlet, such as the outlet 390 illustrated in Fig. 3C; for example, the outlet 390 may be aligned with the discharge opening 160 on the housing of the pool cleaning device illustrated in Fig. 1B.

According to the embodiment of the present disclosure, the waterflow guiding unit may be used to guide the water ejected from the outlet of the vector nozzle to the discharge opening. For example, the waterflow guiding unit 320 may be used to guide the water ejected from the outlet of the vector nozzle 360 to one of the discharge openings 140, 150 and 160.

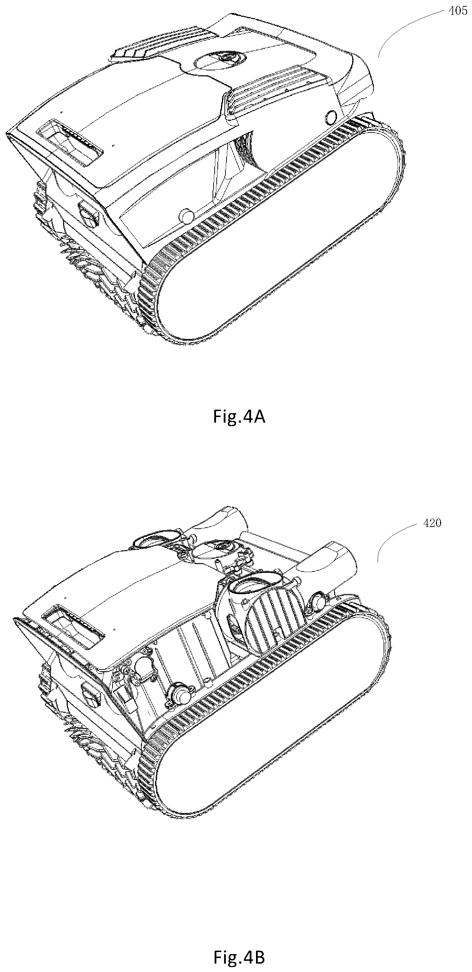

As an example, the waterflow guiding unit 320 may be arranged inside the housing 305 of the pool cleaning device, that is, in the internal space accommodated by the housing 305. Figs. 4A and 4B respectively illustrate the appearance of the pool cleaning device before and after a part of the housing 420 of the pool cleaning device is removed. As illustrated in Figs. 4A-4B, the waterflow guiding unit 420 may be arranged inside the housing 405 of the pool cleaning device, that is, in the internal space accommodated by the housing 405; Specifically, two waterflow guiding units 420 may be symmetrically arranged on both sides of the longitudinal axis of the body of the pool cleaning device and covered by the housing 405 of the pool cleaning device.

By arranging the waterflow guiding unit, the water ejected from the nozzle of the fluid ejecting unit can be guided to the corresponding discharge opening arranged on the housing of the pool cleaning device, so that the structure of the nozzle of the fluid ejecting unit is more compact and easier to rotate, and it is avoided that the long distance between the nozzle of the fluid ejecting unit and the discharge opening on the housing of the pool cleaning device might cause the efficiency of the water ejected to be decrease.

As an example, the waterflow guiding unit may include a water conduit, and the shape of the water conduit is not limited, and any structure that can define the waterflow path may serve as a water conduit, wherein outlet(s) may be provided at the end(s) of the water conduit. For example, as illustrated in Figs. 3A-3B, the waterflow guiding unit includes a water conduit, and outlet(s) such as 370 and 380 can be provided at the ends of the water conduit respectively.

As an example, the waterflow guiding unit may include at least two water conduits, and after the vector nozzle rotates, the outlet thereof can be at least partially aligned with the inlet of one of the at least two water conduits of the waterflow guiding unit.

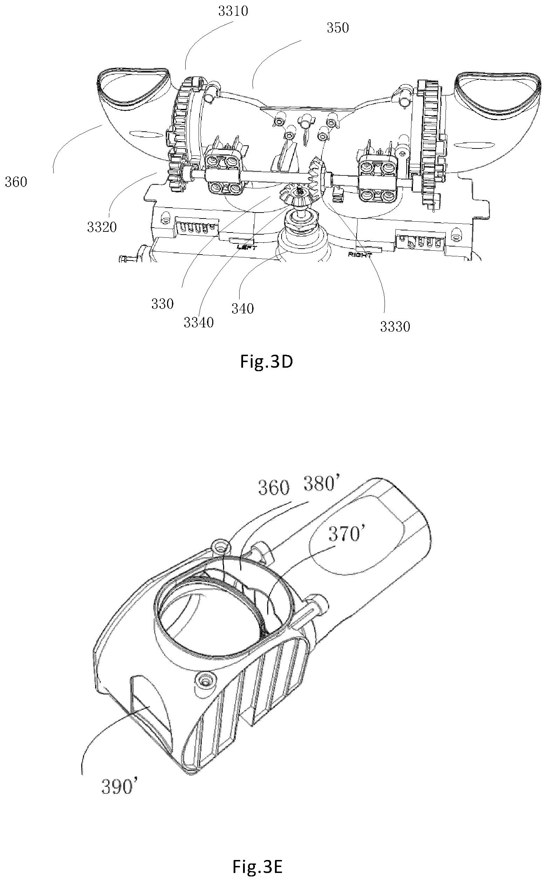

Fig. 3E schematically illustrates the outlet of the vector nozzle 360 and the inlets 370', 380' and 390' of the water conduit. When the vector nozzle 360 rotates, the outlet thereof can be at least partially aligned with one of the inlets 370', 380' or 390'.

It should be understood that since the outlet of the water conduit of the waterflow guiding unit is at least partially aligned with the discharge opening(s) of the housing of the pool cleaning device, after the vector nozzle of the fluid ejecting unit of the pool cleaning device rotates, the outlet of the vector nozzle can be at least partially aligned with the inlet of the water conduit of the waterflow guiding unit, so that the outlet of the vector nozzle can be at least partially aligned with one of the discharge opening on the housing of the pool cleaning device.

As further illustrated in Fig. 3C, the driving unit 220 of the pool cleaning device may include a first driving unit 395 for driving the water to be ejected from the outlet of the vector nozzle via the fluid channel. As an example, the first driving unit 395 may be, for example, a water pump including an impeller and a driving motor. In addition, the water pump for sucking the water in the pool into the filter unit 230 of the pool cleaning device through the inlet provided on the housing 210 of the pool cleaning device may be provided independently of the first driving unit, or the first driving unit may be used as a water pump for sucking water into the filter unit.

In addition, although Fig. 3C illustrates that the first driving unit 395 is separately configured for each fluid ejecting unit, a plurality of fluid ejecting units may share a first driving unit according to actual needs. For example, two fluid ejecting units as illustrated in Fig. 3C can also share a first driving unit. In this case, corresponding valves can be arranged in the fluid channels of the two fluid ejecting units, and the volume/velocity of waterflows in the two fluid channels can be adjusted by controlling the extent to which the valves in the respective fluid channels are open/closed, so as to control the water ejected from the nozzles of the two fluid ejecting units respectively.

Fig. 3D schematically illustrates a partial enlarged view including the fluid ejecting unit 310 after the waterflow guiding unit illustrated in Fig. 3B is removed. As illustrated in Fig. 3D, the fluid ejecting unit 310 may include a fluid channel 350 through which the water flows and a vector nozzle 360, wherein the inlet of the vector nozzle 360 is rotatably connected with the fluid channel 350.

According to the embodiment of the present disclosure, a seal member, such as a rubber ring or a silicone ring, may be provided at the outlet of the vector nozzle 360 or at the inlet of the water conduit of the waterflow guiding unit, so that when the outlet of the nozzle is aligned with the inlet of the waterflow guiding unit, the sealing can be formed in the gap between the inlet of the waterflow guiding unit and the outlet of the vector nozzle, so that the water is discharged to the outside of the pool cleaning device as much as possible, and impurities such as sand particles in the waterflow are prevented from entering the pool cleaning device through the gap between them.

In addition, after the vector nozzle rotates, its outlet can also be partially aligned with the inlet of the water conduit of the waterflow guiding unit, and there is no need to seal between the outlet of the nozzle and the inlet of the water conduit.

As further illustrated in Figs. 3B and 3D, the driving unit 220 of the pool cleaning device may further include a second driving unit 340. According to an embodiment of the present disclosure, the second driving unit 340 may drive the vector nozzle 360 to rotate so that the outlet of the vector nozzle is at least partially aligned with at least one outlet of the waterflow guiding unit.

As an example, the second driving unit 340 can drive the vector nozzle 360 to rotate based on the operation requirement or motion state of the pool cleaning device. For example, as described above, when the pool cleaning device needs to be switched from the bottom operation to the cleaning operation or traveling on the pool wall, the vector nozzle 360 as illustrated in Fig. 3D can be controlled to rotate at a proper timing, so that its outlet is aligned with the outlet 380 of the waterflow guiding unit as illustrated in Fig. 3B, so that the water ejected from the fluid ejecting unit can be guided to the discharge openings 150 on both sides of the top of the housing of the pool cleaning device, thereby generating a thrust perpendicular to the plane of the bottom of the pool cleaning device and towards the bottom of the pool cleaning device. For another example, when the pool cleaning device is switched from travelling on the wall of the pool to performing clean or traveling on the water surface or underwater, the vector nozzle 360 as illustrated in Fig. 3D can be controlled to rotate at a proper timing, so that its outlet is switched from being aligned with the outlet 380 to being aligned with the outlet 370 or 390 of the waterflow guiding unit as illustrated in Fig.3B, so that the water ejected from the fluid ejecting unit can be guided to the discharge openings 140 or 160 on both sides of the housing of the pool cleaning device along the longitudinal axis of the body, thereby generating a thrust along the longitudinal axis of the body for the forward/backward movement.

As an example, the second driving unit 340 may include a motor and a control unit, wherein the control unit may control the motor to drive the vector nozzle 360 to rotate based on a received control signal.

For example, as illustrated in Figs. 1A-B, the discharge opening(s) on the housing of the pool cleaning device may include a first discharge opening 140 with discharging in a first direction, a second discharge opening 150 with discharging in a second direction, and a third discharge opening 160 with discharging in a third direction.

Optionally, the first direction and the third direction are parallel to the longitudinal axis of the body of the pool cleaning device, and the second direction is vertical and upward to the plane where the bottom of the body of the pool cleaning device is located. That is, the first direction and the third direction are opposite, and the second direction is perpendicular to the first and third directions.

As an example, the first direction, the second direction and the third direction are located on the same plane.

The second driving unit 340 may control the motor to drive the vector nozzle 360 to rotate based on the received control signal, for example, so that the outlet of the vector nozzle is rotated from the first direction to the second direction, or from the first direction to the third direction via the second direction. In addition, the water ejecting speed of the vector nozzle in different directions can also be adjusted accordingly.

Alternatively, the second driving unit 340 may adopt various driving strategies in which, for example, the duration in which the second driving unit drives the vector nozzle 360 to rotate may be set as a time threshold. Optionally, the time threshold may be set not to exceed 3S.

Alternatively, the second driving unit 340 may control the motor to drive the vector nozzle 360 to rotate so that the outlet of the vector nozzle is rotated from the first direction to the third direction via the second direction, instead of continuously driving, and the motor pauses for a few seconds when the second direction is arrived, and then continue to drive the vector nozzle 360 to rotate until its outlet direction is aligned with the third direction. Those skilled in the art can design a specific strategy for the second driving unit 340 to drive the vector nozzle according to actual needs, and the principle of the present disclosure is not limited to this.

As further illustrated in Figs. 3B and 3D, the pool cleaning device may further include a transmission unit 330. The vector nozzle can be driven to rotate by the second driving unit 340 illustrated in Fig. 3D via the transmission unit 330, so that the direction of outlet of the vector nozzle is at least partially aligned with one of the outlets 370, 380 or 390 of the waterflow guiding unit illustrated in Fig. 3B or Fig. 3C, and then the water can be discharged from the pool cleaning device via the discharge opening(s) 140, 150 or 160 on the housing of the pool cleaning device, thus generating a thrust for the pool cleaning device to travel in the corresponding direction.

According to the embodiment of the present disclosure, as illustrated in Figs. 3B and 3D, the transmission unit 330 is coupled between the vector nozzle 360 and the second driving unit 340; the second driving unit 340 drives the vector nozzle 360 to rotate via the transmission unit 330.

As an example, as illustrated in Fig. 3D, the transmission unit 330 includes a first set of gears including a first gear 3310 and a second gear 3320, wherein the first gear 3310 is arranged on the vector nozzle 360 and the second gear 3320 meshes with the first gear 3310.

As further illustrated in Fig. 3D, the transmission unit 330 further includes a second set of gears including a third gear 3330 and a fourth gear 3340, wherein the third gear 3330 and the second gear 3320 are installed on a rod, and the fourth gear 3340 meshes with the third gear 3330; the fourth gear 3340 is driven by the second driving unit 340.

Thus, the fourth gear 3340 is driven by the second driving unit 340 to rotate, and the third gear 3330 is driven to rotate by the engagement between the fourth gear 3340 and the third gear 3330. Because the third gear 3330 and the second gear 3320 are installed on the same rod, the rotation of the third gear 3330 will be transmitted to the second gear 3320 through the rod, and finally the vector nozzle 360 will be driven to rotate through the rotation of the second gear 3320 and the engagement between the second gear 3320 and the first gear 3310. In other words, the second driving unit 340 can finally drive the vector nozzle 360 to rotate through the transmission of the transmission unit 330.

As an example, the third gear 3330 and the fourth gear 3340 may be bevel gears.

It should be understood that the transmission unit 330 illustrated in Figs. 3B and 3D is only an example of an embodiment of the present disclosure, and the principles of the present disclosure are not limited thereto. In fact, those skilled in the art can devise other transmission unit which adopts different structures and can also drive the vector nozzle 360 to rotate under the driving of the second driving unit 340 according to actual needs.

For example, unlike those illustrated in Figures 3A-3D, each fluid ejecting unit can be separately equipped with a corresponding driving unit and transmission unit, that is, each vector nozzle can be separately equipped with a corresponding driving unit and transmission unit, instead of two vector nozzles sharing a driving unit and a transmission unit as illustrated in Figures 3A-3D.

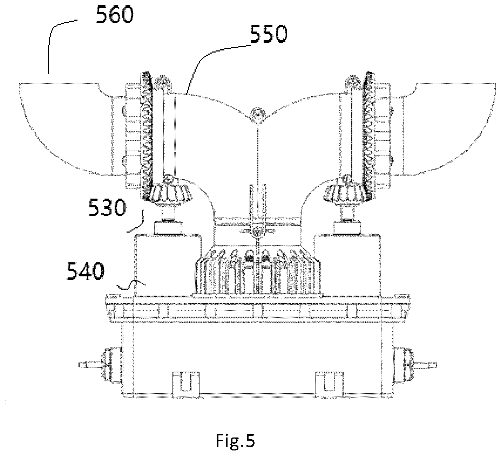

For example, as illustrated in Fig. 5, the vector nozzle 560 of each fluid ejecting unit can be equipped with a separate driving unit 540 and a corresponding transmission unit 530. That is, the vector nozzle of each fluid ejecting unit can be driven independently to rotate.

In addition, as illustrated in Fig. 5, the fluid channel 550 of each fluid ejecting unit may share a first driving units (not illustrated); in this case, corresponding valves can be arranged in the fluid channels of the two fluid ejecting units respectively, and the volume/velocity of waterflow in the two fluid channels can be adjusted by controlling the extent to which the valves in the respective fluid channels is open/closed, so as to control the water ejected from the nozzles of the two fluid ejecting units respectively.

In addition, in order to control the direction of the outlet of the vector nozzle, according to an embodiment of the present disclosure, the pool cleaning device may further include a direction determining unit for determining the direction of the outlet of the vector nozzle.

As an example, based on the determined direction of the outlet of the vector nozzle, the second driving unit may drive the vector nozzle to rotate.

In other words, in order to control the outlet of the vector nozzle to rotate to a direction being aligned with one of the outlets of the waterflow guiding unit, it is necessary to determine the direction of the outlet of the vector nozzle so that the second driving unit performs the driving operation. Therefore, according to an embodiment of the present disclosure, the pool cleaning device can include a direction determining unit for determining the direction of the outlet of the vector nozzle.

Specifically, the direction determining unit can be realized as a sensor which detects the direction of the outlet of the vector nozzle, or can obtain the information about the rotation of the vector nozzle recorded by the pool cleaning device.

For example, a signal transmitting component can be arranged on one of the vector nozzle and the fluid channel of the fluid ejecting unit, and a corresponding signal receiving component can be arranged on the other of the vector nozzle and the fluid channel, so as to receive signals emitted by the signal transmitting component, thus determining the relative positional relationship between the direction of the outlet of the vector nozzle and that of the fluid channel (for example, the direction of the outlet of the fluid channel), and further determining the specific position of the outlet direction of the vector nozzle.

As an example, the signal transmitting component is a magnetic component, and the signal receiving component is a Hall sensor.

As an example, the signal transmitting component is an infrared emitting component, and the signal receiving part is an infrared receiving component.

In addition, a position detecting component, such as a photoelectric encoder, a resolver, can also be arranged on the vector nozzle, and the output signals are fed back to a processing unit/control unit of the pool cleaning device, and are used as information about the rotation of the vector nozzle to be recorded by the pool cleaning device, so that the corresponding control instructions can be sent to the second driving unit through the processing unit/control unit of the pool cleaning device to drive the vector nozzle to rotate towards a target direction, for example, to align with one of the outlets of the waterflow guiding unit.

According to the embodiment of the present disclosure, the vector nozzle is driven to rotate by the second driving unit of the pool cleaning device, so that the direction of the water ejected from the fluid ejecting unit of the pool cleaning device can be changed, and the water ejected from the fluid ejecting unit can be guided to the corresponding discharging opening on the housing of the pool cleaning device via the waterflow guiding unit arranged in the pool cleaning device, thus providing a thrust for the pool cleaning device in different directions. In addition, through the first driving unit of the pool cleaning device, the volume and/or velocity of waterflow via the fluid channel and the vector nozzle of the fluid ejecting unit can be controlled, thus controlling a magnitude of the thrust provided for the pool cleaning device.

For example, when the thrusts provided on both sides in the direction parallel to the longitudinal axis of the pool cleaning device are different, the turning of the pool cleaning device can be easily realized, thus adjusting the position and orientation.

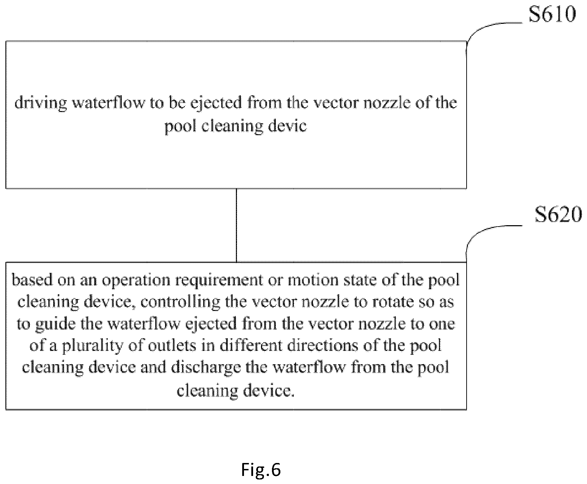

According to another aspect of the present disclosure, a method for controlling the pool cleaning device is also provided. As illustrated in Fig. 6, the method includes: S610, driving water to be ejected from the vector nozzle of the pool cleaning device; and S620, based on an operation requirement or motion state of the pool cleaning device, controlling the vector nozzle to rotate so as to guide the water ejected from the vector nozzle to one of a plurality of outlets in different directions of the pool cleaning device and discharge the water from the pool cleaning device.

In other words, according to the embodiment of the present disclosure, the direction and magnitude of the thrust provided for the pool cleaning device can be controlled, and make it convenient for the pool cleaning device to perform various cleaning operations, and the traveling direction and posture can be changed as required.

For example, by controlling the vector nozzle to rotate, the direction of water ejected from the fluid ejecting unit of the pool cleaning device can be changed, and then the traveling direction of the pool cleaning device can be changed. For example, when the vector nozzle is adjusted to eject water to the rear side of the pool cleaning device, a thrust can be generated to drive the pool cleaning device to move forward; and when the vector nozzle is adjusted to eject water to the front side of the pool cleaning device, a thrust can be generated to drive the pool cleaning device to move backward; and when the vector nozzle is adjusted to eject water to the upper side of the pool cleaning device, a thrust can be generated to drive the pool cleaning device to move downward.

Although it is not illustrated in the drawings the specific structure by which the vector nozzle ejects water towards the bottom of the pool cleaning device, the principle of this disclosure is also applicable to the case where the discharge opening(s) is arranged at the bottom of the housing of the pool cleaning device, and the direction of the discharge opening(s) can be perpendicular to the plane where the bottom of the pool cleaning device is located. For example, the water ejected from the fluid ejecting unit can be guided downward to the direction perpendicular to the plane where the bottom of the pool cleaning device is located, thus generating an upward thrust for the pool cleaning device.

In addition, for the discharging openings arranged at different positions on the housing of the pool cleaning device, the water ejected from the fluid ejecting unit can be guided to the corresponding discharging opening(s), so that the traveling direction of the pool cleaning device is not limited to the horizontal and/or vertical direction, but also can be an inclined direction at a certain angle with regard to the vertical direction. For those skilled in the art, the position, shape and/or number of the discharge opening(s) on the housing of the pool cleaning device, as well as the specific structure, position and/or number of corresponding waterflow guiding units and/or fluid ejecting units can be set according to the specific application, size of the pool cleaning device and the like.

Thus, several aspects of the present disclosure have been presented with reference to various devices and methods. These devices and methods are illustrated in the drawings by various blocks, components, circuits, procedures, algorithms, etc. (collectively referred to as "elements"). These elements can be implemented using electronic hardware, computer software or any combination thereof. Whether these components are implemented as hardware or software depends on the specific application and the design constraints of the whole system.

For example, an element or any part of an element or any combination of elements may be implemented as a "processing system" including one or more processors. One or more processors in a processing system may execute software. Software should be broadly interpreted as meaning instructions, instruction sets, codes, code segments, program codes, programs, subprograms, software components, applications, software applications, software packages, routines, subroutines, objects, executable programs, execution threads, procedures, functions, etc., whether they are referred to as software, firmware, middleware, microcode, hardware description language or others.

Thus, in one or more exemplary embodiments, the described functions may be implemented in hardware, software, or any combination thereof. If implemented in software, these functions can be stored or encoded as one or more instructions or codes on a computer-readable medium. Computer-readable media include computer storage media. Storage media can be any available media that can be accessed by a computer. By way of example and not limitation, such computer-readable media may include random access memory (RAM), read-only memory (ROM), electrically erasable programmable ROM (EEPROM), optical disk storage, magnetic disk storage, other magnetic storage devices, combinations of the above types of computer-readable media, or any other media that can be used to store computer-executable code in the form of instructions or data structures accessible by a computer.

It should be understood that the particular order or hierarchy of blocks in the disclosed process/flowchart is illustrative of an example method. Based on design preferences, it should be understood that a specific order or hierarchy of blocks in a process/flowchart may be rearranged. In addition, some blocks may be combined or omitted. The appended method claims present the elements of various blocks in sample order and are not meant to be limited to the particular order or hierarchy presented.

The foregoing description is provided to enable those skilled in the art to practice various aspects described herein. Unless otherwise stated, references to elements in the singular are not intended to mean "one and only one" but "one or more". The expression "exemplary" used here means "serving as an example, instance or illustration". Any aspect described herein as "exemplary" is not necessarily to be construed as more preferred or advantageous than other aspects. Unless otherwise stated, the term "some" refers to one or more. Combinations such as at least one of A, B or C, one or more of A, B or C, at least one of A, B and C, one or more of A, B and C, and A, B, C or any combination thereof include any combination of A, B and/or C, and may include multiples of A, multiples of B, or multiples of C. Specifically, combinations such as "at least one of A, B or C", "A, B or C", "at least one of A, B and C", " one or more of A, B and C", and "A, B, C or any combination thereof" may be only A, only B, only C, A and B, A and C, B and C, or A and B and C, wherein any such combination can include one or more members of A, B, C or all the members.

In this disclosure, unless otherwise specified and limited, the terms "install", "set", "connect", "attach" , "fix" and "couple " should be broadly understood, for example, they can be fixed, detachable or integrated; it can be mechanically connected, electrically connected or communicatively connected with each other; it can be directly connected or indirectly connected through an intermediary, and it can be the internal connection of two elements or the interaction between two elements, unless otherwise specified. For those skilled in the art, the specific meanings of the above terms in this disclosure can be understood according to specific situations.

Apparently, the embodiments described above are only a part of the embodiments of this application, but not all the embodiments. Some embodiment of this application is illustrated in the drawings, but it does not limit the patent scope of this application. This application can be implemented in many different forms. These embodiments are provided to make the disclosure of this application more thorough and comprehensive. Although the present application has been described in detail with reference to the aforementioned embodiments, it is still possible for a person skilled in the art to modify the technical scheme described in the aforementioned specific embodiments or to replace some technical features with equivalents.

## Claims

1. A pool cleaning device, comprising:
a fluid ejecting unit comprising a fluid channel through which water flows and a vector nozzle, wherein an inlet of the vector nozzle is rotatably connected with the fluid channel;
a first driving unit configured to drive water to be ejected from an outlet of the vector nozzle via the fluid channel;
a housing, wherein at least two discharge openings are arranged on the housing, the two discharge openings configured to discharge the water ejected from the outlet of the vector nozzle to outside of the pool cleaning device; and
a second driving unit configured to drive the vector nozzle to rotate so that the outlet of the vector nozzle is at least partially aligned with one of the at least two discharge openings.

2. The pool cleaning device according to claim 1, further comprising a waterflow guiding unit configured to guide the water ejected from the outlet of the vector nozzle to one of the at least two discharge openings;
optionally, the waterflow guiding unit comprises at least two water conduits, and the outlet of the vector nozzle is configured to be at least partially aligned with an inlet of one of the at least two water conduits after the vector nozzle is rotated.

3. The pool cleaning device according to claim 2, wherein the outlets of the at least two water conduits are at least partially aligned with the at least two discharge openings respectively.

4. The pool cleaning device according to any one of claims 1-3, wherein the second driving unit is configured to drive the vector nozzle to rotate based on an operation requirement or motion state of the pool cleaning device;
optional, the second driving unit comprises a motor and a control unit, and the control unit is configured to control the motor to drive the vector nozzle to rotate.

5. The pool cleaning device according to any one of claims 2-4, wherein the waterflow guiding unit is arranged inside the housing.

6. The pool cleaning device according to any one of claims 1-5, further comprising:
a direction determining unit configured to determine a direction of the outlet of the vector nozzle;
wherein, the second driving unit is configured to drive the vector nozzle to rotate based on the determined direction of the outlet of the vector nozzle;
optionally, the direction determining unit comprises:
at least one signal transmitting component arranged on one of the vector nozzle and the fluid channel; and
at least one signal receiving component arranged on the other of the vector nozzle and the fluid channel.

7. The pool cleaning device according to claim 6, wherein,
the at least one signal transmitting component is a magnetic component; and
the at least one signal receiving component is a Hall sensor.

8. The pool cleaning device according to any one of claims 1-7, further comprising:
a transmission unit coupled between the vector nozzle and the second driving unit; wherein, the second driving unit is configured to drive the vector nozzle to rotate via the transmission unit;
optionally, the transmission unit comprises a first set of gears which comprises a first gear and a second gear, wherein the first gear is arranged on the vector nozzle, and the second gear is meshed with the first gear; the second driving unit is configured to drive the second gear.

9. The pool cleaning device according to claim 8, wherein the transmission unit further comprises a second set of gears which comprises a third gear and a fourth gear, the third gear and the second gear are installed on a rod, and the fourth gear is meshed with the third gear;
the second driving unit is configured to drive the fourth gear.

10. The pool cleaning device according to any one of claims 2-9, wherein a sealing member is arranged on the outlet of the vector nozzle or on at least one inlet of the at least two water conduits.

11. The pool cleaning device according to any one of claims 1-10, wherein the at least two discharge openings comprise a first discharge opening with discharging in a first direction, a second discharge opening with discharging in a second direction, and a third discharge opening with discharging in a third direction;
optionally, the first direction, the second direction and the third direction are located on a same plane.

12. The pool cleaning device according to any one of claims 1-11, wherein a duration in which the second driving unit drives the vector nozzle to rotate is set as a time threshold.

13. The pool cleaning device according to any one of claims 1-12, wherein,
at least one pair of the fluid ejecting units and the corresponding discharge openings are symmetrically arranged on both sides of a longitudinal axis of a body of the pool cleaning device;
optionally, the vector nozzles of the at least one pair of fluid ejecting units are configured to be driven independently to rotate.

14. The pool cleaning device according to any one of claims 1-13, further comprising a filtering unit and a traveling unit, wherein the filtering unit is configured to filter the water sucked from the outside of the pool cleaning device by the first driving unit, and the traveling unit is configured to drive the pool cleaning device to travel;
optionally, at least one of the at least two discharge openings is provided with a detachable grid plate.

15. A method for controlling a pool cleaning device, comprising:
driving water to be ejected from a vector nozzle of the pool cleaning device; and
based on an operation requirement or motion state of the pool cleaning device, controlling the vector nozzle to rotate so as to guide the water ejected from the vector nozzle to one of a plurality of discharge openings in different directions of the pool cleaning device and discharge the water from the pool cleaning device.
